# EUROPÄISCHE PATENTSCHRIFT

(11) **EP 2 634 443 B1**
(45) Veröffentlichungstag und Bekanntmachung des Hinweises auf die Patenterteilung: **17.10.2018**
(21) Anmeldenummer: 13156386.8
(22) Anmeldetag: 22.02.2013
(51) Int. Cl.: F16D 23/04, F16D 11/14

(54) **Kupplungsanordnung**
Coupling assembly
Agencement de couplage

(30) Priorität: 28.02.2012 DE 102012203029
(43) Veröffentlichungstag der Anmeldung: 04.09.2013
(73) Patentinhaber: SABO-Maschinenfabrik GmbH, 51645 Gummersbach (DE)
(72) Erfinder: Meiswinkel, Stephan, 57482 Wenden (DE); Viebahn, Knut, 51647 Gummersbach (DE)
(74) Vertreter: Holst, Sönke

(56) Entgegenhaltungen:
- AU-B2- 417 787
- DE-A1- 3 011 590
- DE-A1-102010 002 933
- US-A- 3 078 975

## Beschreibung

Die Erfindung betrifft eine Kupplungsanordnung, umfassend ein Gehäuse, eine Antriebswelle und eine Abtriebswelle, die in dem Gehäuse drehbar gelagert sind, ein Zahnrad, das um eine Drehachse der Abtriebswelle drehbar angeordnet ist und das mit der Antriebswelle in einem Verzahnungseingriff steht, zumindest eine Reibscheibe, die axial verschiebbar und drehfest auf der Abtriebswelle angeordnet ist, eine Axialverstellvorrichtung zum Betätigen einer Übertragungsanordnung, mittels der die zumindest eine Reibscheibe in eine reibschlüssige Verbindung mit dem Zahnrad beaufschlagbar ist, um das Zahnrad über die zumindest eine Reibscheibe antriebsmäßig mit der Abtriebswelle zu verbinden.

Aus der US 2005/0098406 A1 ist ein Kupplungsmechanismus bekannt, bei dem eine angetriebene Schnecke ein Schneckenrad antreibt, das konzentrisch zu einer Abtriebswelle drehbar angeordnet ist. Über einen Kupplungsmechanismus mit einem Betätigungsmechanismus und konischen Reibscheiben kann das Schneckenrad über eine reibschlüssige Verbindung antriebsmäßig mit der Abtriebswelle verbunden werden. Das Mitnahmemoment zwischen dem Schneckenrad und den konischen Reibscheiben ist erfahrungsgemäß begrenzt durch die über den Betätigungsmechanismus aufzubringende Betätigungskraft, die infolge Auslegungskriterien nur begrenzt hoch sein kann. Dies kann dazu führen, dass im Dauerbetrieb bei zugestelltem Kupplungsmechanismus Schlupf zu Verschleiß und Wärmeentwicklung führt.

Außerdem offenbart die US 3,078,975 A1 eine Kupplungsanordnung, umfassend
ein Gehäuse, eine Antriebswelle und eine Abtriebswelle, die in dem Gehäuse drehbar gelagert sind,
ein Zahnrad, das um eine Drehachse der Abtriebswelle drehbar angeordnet ist und das mit der Antriebswelle in einem Verzahnungseingriff steht,
zumindest eine konische Reibscheibe, die axial verschiebbar und drehfest auf der Abtriebswelle angeordnet ist,
eine Axialverstellvorrichtung zum Betätigen einer Übertragungsanordnung, mittels der die zumindest eine Reibscheibe in eine reibschlüssige Verbindung mit dem Zahnrad beaufschlagbar ist, um das Zahnrad über die zumindest eine Reibscheibe antriebsmäßig mit der Abtriebswelle zu verbinden,
wobei die Übertragungsanordnung und das Zahnrad in einen formschlüssigen Eingriff zueinander überführbar sind, um das Zahnrad über die Übertragungsanordnung antriebsmäßig mit der Abtriebswelle zu verbinden. Hiervon ausgehend besteht die Aufgabe der vorliegenden Erfindung darin, eine im Dauerbetrieb schlupffreie Kupplungsanordnung bereitzustellen.

Die Aufgabe wird gelöst mit einer Kupplungsanordnung gemäß Anspruch 1.

Bei der erfindungsgemäßen Kupplungsanordnung ergibt sich in vorteilhafterweise, dass die Betätigungskraft, die durch die Axialverstellvorrichtung aufgebracht werden muss, gering gehalten werden kann, da diese Betätigungskraft lediglich für ein Anfahren der Kupplungsanordnung ausreichen muss. Wird die Kupplungsanordnung nach dem Anfahren dauerhaft betrieben, sorgt der formschlüssige Eingriff zwischen dem Zahnrad und der Übertragungsanordnung für einen schlupffreien Betrieb, so dass kein Verschleiß und keine Wärmeentwicklung an der Reibscheibe entstehen. Das maximale während dieses Dauerbetriebs übertragbare Drehmoment hängt somit lediglich von der Bauteilestabilität als solche ab, beispielsweise von der Dimensionierung und der Materialauswahl des Gehäuses und insbesondere von der Stabilität der Zahnräder beziehungsweise der sich im Eingriff befindenden Bauteile. Insgesamt ergibt sich bei der erfindungsgemäßen Kupplungsanordnung für den Einkuppelvorgang mittels der reibschlüssigen Verbindung eine weiche Anfahrcharakteristik und eine hohe Drehmomentübertragungsfähigkeit im Dauerbetrieb mittels der formschlüssigen Verbindung zwischen Zahnrad und Übertragungsanordnung. Die weiche Anfahrcharakteristik ist besonders dann von Vorteil, wenn die Kupplungsanordnung in einem handgeführten Mähgerät zum Einsatz kommt, da nämlich für eine Bedienperson, die beim Schieben eines solchen Mähgeräts den Eigenantrieb über die Kupplungsanordnung hinzuschaltet, ein zu abruptes Losfahren des Mähgeräts zumindest störend wäre. In bevorzugter Ausgestaltung ist die zumindest eine Reibscheibe konisch ausgeführt, wodurch eine besonders weiche Anfahrcharakteristik bei gleichzeitig niedrigen Betätigungskräften für den Einkuppelvorgang gewährleistet werden kann.

Bevorzugt ist die Übertragungsanordnung mittels der Axialverstellvorrichtung in den formschlüssigen Eingriff mit dem Zahnrad überführbar. In vorteilhafterweise wird die Axialverstellvorrichtung sowohl dafür genutzt, die reibschlüssige Verbindung zwischen der zumindest einen Reibscheibe und dem Zahnrad als auch die formschlüssige Verbindung zwischen dem Zahnrad und der Übertragungsanordnung herzustellen.

In konkreter Ausgestaltung ist die Übertragungsanordnung konzentrisch und zwischen einer Auskuppelposition, in der eine antriebsmäßige Verbindung zwischen dem Zahnrad und der Abtriebswelle im Wesentlichen unterbrochen ist, und einer Eingriffsposition, in der die Übertragungsanordnung in formschlüssigem Eingriff mit dem Zahnrad steht, axial verschiebbar auf der Abtriebswelle angeordnet. Durch die konzentrische Anordnung der Übertragungsanordnung ergibt sich ein kompakter Aufbau. Durch die axiale Verschiebbarkeit der Übertragungsanordnung auf der Abtriebswelle ist ein besonders gutes Zusammenwirken mit der Axialverstellvorrichtung gewährleistet.

In weiterhin konkreter Ausgestaltung ist die Übertragungsanordnung zwischen der Auskuppelposition und der Eingriffsposition in eine Einkuppelposition verschiebbar, in der die zumindest eine Reibscheibe reibschlüssig mit dem Zahnrad verbunden ist. Hierdurch ist gewährleistet, dass die Kupplungsvorrichtung bei Betätigung der Axialverstellvorrichtung durch entsprechende Bedienmittel durch eine Bedienperson zuerst in die reibschlüssige Einkuppelposition, mit dem Vorteil des langsamen Drehmomentanstiegs, und bei weiterer Betätigung anschließend in die formschlüssige Eingriffsposition, mit dem Vorteil des schlupffreien Betriebs, gelangt.

Bevorzugt nimmt über einen Verschiebeweg von der Einkuppelposition in die Eingriffsposition der Übertragungsanordnung die Beaufschlagung der zumindest einen Reibscheibe durch die Übertragungsanordnung stetig zu. Hierdurch wird ein langsamer Drehmomentanstieg während des Anfahrens der Kupplungsanordnung gewährleistet. In einer bevorzugten Ausgestaltung wird die stetige Zunahme der Beaufschlagung durch eine Exzenteranordnung gewährleistet, wobei die Axialverstellvorrichtung die Exzenteranordnung umfassen kann. Alternative Ausgestaltungen können auch eine Kniehebelanordnung zur Betätigung der Axialverstellvorrichtung umfassen. Es kann auch eine hydraulische Betätigung der Axialverstellvorrichtung vorgesehen sein.

Bevorzugt umfasst die Übertragungsanordnung ein elastisches Element, über das die zumindest eine Reibscheibe in die reibschlüssige Verbindung mit dem Zahnrad beaufschlagbar ist. Hierüber ist gewährleistet, dass die Übertragungsvorrichtung von der Einkuppelposition, in der eine reibschlüssige Verbindung zwischen der zumindest einen Reibscheibe und dem Zahnrad besteht, unter Verstärkung dieser reibschlüssigen Verbindung über den Verschiebeweg weiter in die Eingriffsposition verschiebbar ist.

Bevorzugt umfasst die Übertragungsanordnung ein Mitnehmerelement, das in den formschlüssigen Eingriff mit dem Zahnrad überführbar ist. Insbesondere ist vorgesehen, dass das Mitnehmerelement axial verschiebbar und drehfest auf der Abtriebswelle angeordnet ist. Hierüber ist gewährleistet, dass einerseits über die axiale Verschiebung das Mitnehmerelement mit dem Zahnrad in Eingriff überführbar ist und andererseits in der Eingriffsposition der Kraftfluss von der Antriebswelle, über das Zahnrad, über das Mitnehmerelement auf die Abtriebswelle geleitet wird.

Bevorzugt weist das Mitnehmerelement zumindest einen parallel zur Drehachse ausgerichteten Mitnehmerbolzen zum Eingriff in das Zahnrad in der Eingriffsposition auf. Von Vorteil ist, dass die Anzahl der Mitnehmerbolzen, je nach Einsatzgebiet der Kupplungsanordnung, fertigungstechnisch einfach variiert werden kann.

Bevorzugt ist der zumindest eine Mitnehmerbolzen in axialer Richtung nachgiebig in dem Mitnehmerelement gehalten. Dies stellt ein weiches Anlaufen des Mitnehmerelements an das Zahnrad sicher.

Bevorzugt ist in dem Zahnrad zumindest eine in Richtung des Mitnehmerelements zeigende Nut vorgesehen ist, zum Eingriff des zumindest einen Mitnehmerbolzens in der Eingriffsposition. Hierbei ist vorgesehen, dass die zumindest eine Nut einen in Umfangsrichtung des Zahnrads gekrümmten Verlauf hat. Der zumindest eine Mitnehmerbolzen und die zumindest eine Nut sind im gleichen radialen Abstand von der Drehachse der Abtriebswelle angeordnet.

In einer ersten Ausführungsform der Kupplungsanordnung ist die Axialverstellvorrichtung zu entgegengesetzten axialen Seiten zumindest mittelbar in dem Gehäuse abgestützt.

In einer zweiten Ausführungsform der Kupplungsanordnung ist die Axialverstellvorrichtung zu entgegengesetzten axialen Seiten zumindest mittelbar gegenüber der Abtriebswelle abgestützt.

Zwei Ausführungsformen der erfindungsgemäßen Kupplungsvorrichtung werden im Folgenden anhand der Figuren beschrieben. Hierin zeigen
Figur 1 einen Querschnitt einer ersten Ausführungsform der Kupplungsvorrichtung in einem ausgerückten Zustand,
Figur 2 einen Querschnitt einer zweiten Ausführungsform der Kupplungsvorrichtung in einem eingerückten Zustand,
Figur 3 einen Querschnitt der zweiten Ausführungsform der Kupplungsvorrichtung in einem ausgerückten Zustand und
Figur 4 einen Ausschnitt eines Querschnitts gemäß der Linie A-A in Figur 3.

Die beiden Ausführungsformen der erfindungsgemäßen Kupplungsvorrichtung werden zunächst bezüglich ihrer Gemeinsamkeiten beschrieben.

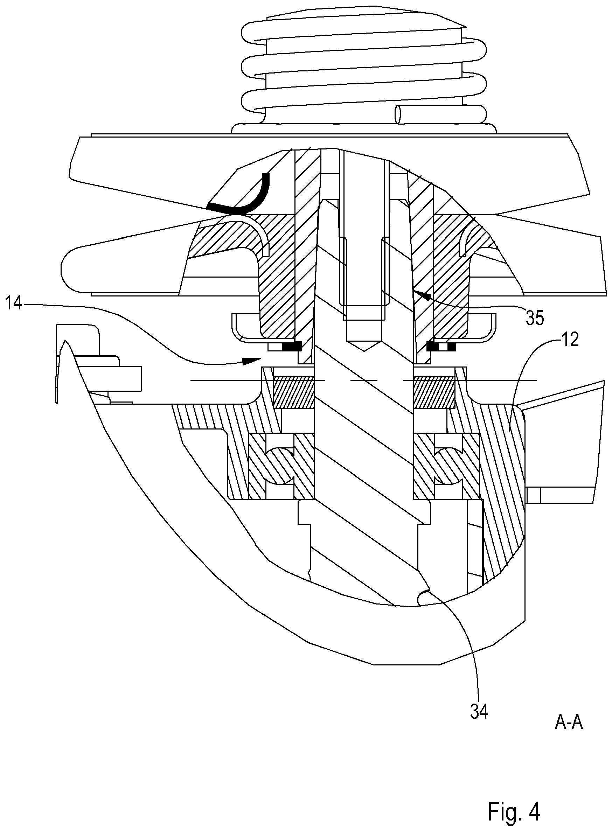

Die Figuren zeigen eine Kupplungsanordnung 10 mit einem Gehäuse 12, in dem eine Antriebswelle 14 und eine Abtriebswelle 16 drehbar gelagert sind. Hierbei erfolgt deren Lagerung in nicht näher beschriebener Weise, beispielsweise mittels Kugellager oder mittels Gleitlager. Die Antriebswelle 14 ist mit einer Schnecke 34 versehen, wobei die Schnecke 34 entweder einteilig mit der Antriebswelle 14 ausgebildet ist oder als separates Bauteil mit der Antriebswelle 14 drehfest verbunden ist. In der Figur 4 ist die zweiteilige Variante zu erkennen, bei der die Schnecke über eine Konuspaarung 35 in der Antriebswelle klemmend gehalten ist. Eine Verzahnung kann alternativ vorgesehen sein.

Die Abtriebswelle 16 kann in nicht näher dargestellter Weise an beiden Enden mit jeweils einem Rad eines handgeführten Mähgeräts verbunden sein. Die Antriebswelle 14 kann in nicht näher dargestellter Weise beispielsweise von einem Riemen angetrieben werden, der seinerseits von dem Motor des Mähgeräts angetrieben wird, der auch ein rotierendes Schneidmesser antreibt.

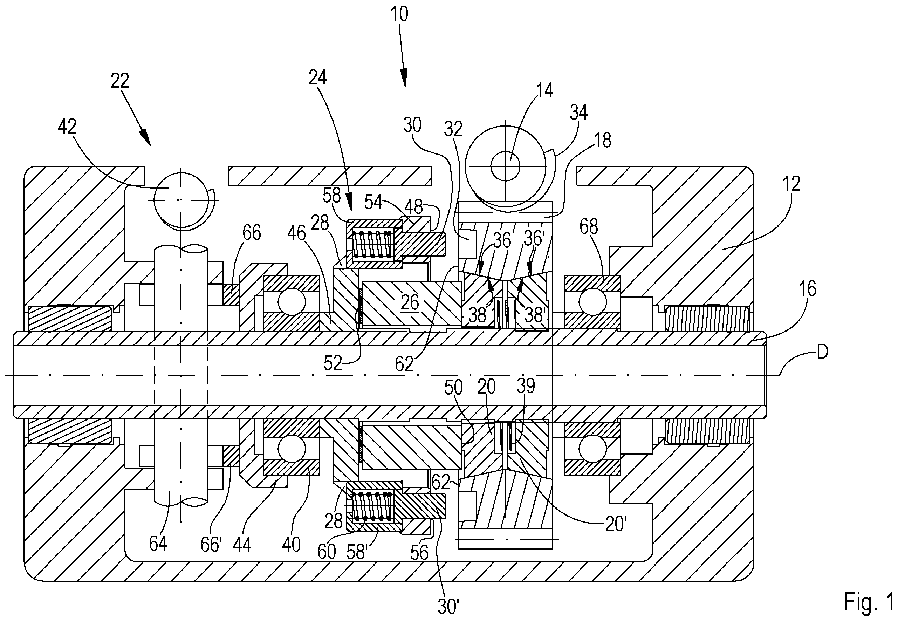

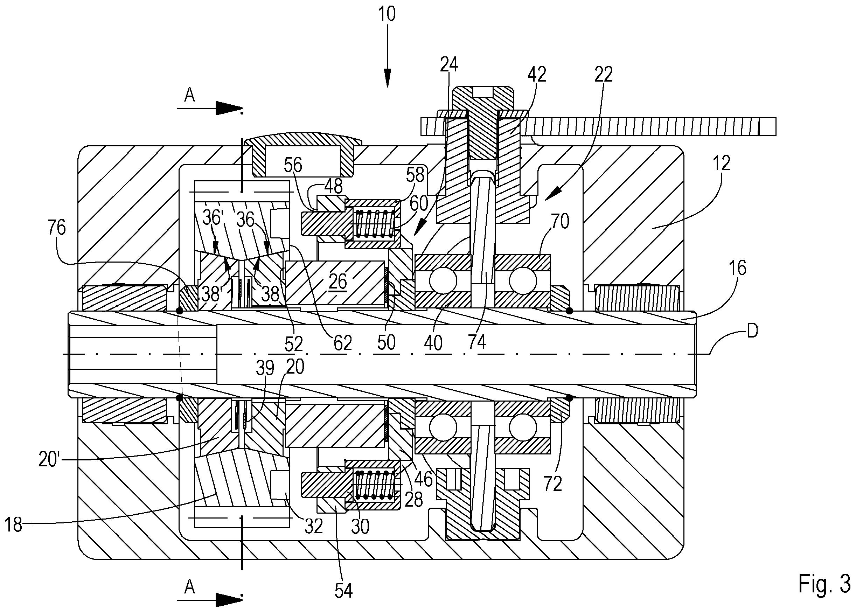

Die Schnecke 34 steht in einem permanenten Verzahnungseingriff mit einem Zahnrad 18. Das Zahnrad 18 ist konzentrisch zu der Drehachse D der Abtriebswelle 16 angeordnet und in einer Auskuppelposition der Kupplungsanordnung 10, die in den Figuren 1 und 3 gezeigt ist, drehbar gegenüber der Abtriebswelle 16. Konzentrisch innerhalb des Zahnrades 18 sind auf der Abtriebswelle 16 drehfest aber axial beweglich zwei konische Reibscheiben 20, 20' angeordnet. Die äußeren konischen Reibflächen 36, 36' der Reibscheiben 20, 20' können mit jeweiligen konischen Gegenflächen 38, 38' an einem Innenumfang des Zahnrads 18 in eine reibschlüssige Verbindung gebracht werden. Zwischen den Reibscheiben 20, 20' ist eine Wellfeder 39 angeordnet und beaufschlagt die Reibscheiben 20, 20' voneinander weg.

Die Antriebswelle 14 und Abtriebswelle 16 sind in dem Gehäuse 12 rechtwinklig zueinander angeordnet, wobei auch hiervon abweichende Anordnungen ausgeführt sein können. Axial versetzt zu dem Zahnrad 18 sind konzentrisch zu der Abtriebswelle 16 eine Axialverstellvorrichtung 22 und eine Übertragungsanordnung 24 in dem Gehäuse 12 angeordnet. Zwischen der Axialverstellvorrichtung 22 und der Übertragungsanordnung 24 sitzt axial verschiebbar auf der Abtriebswelle 16 zur Übertragung der Zustellbewegung, die durch die Axialverstellvorrichtung 22 erzeugt wird, ein Kugellager 40.

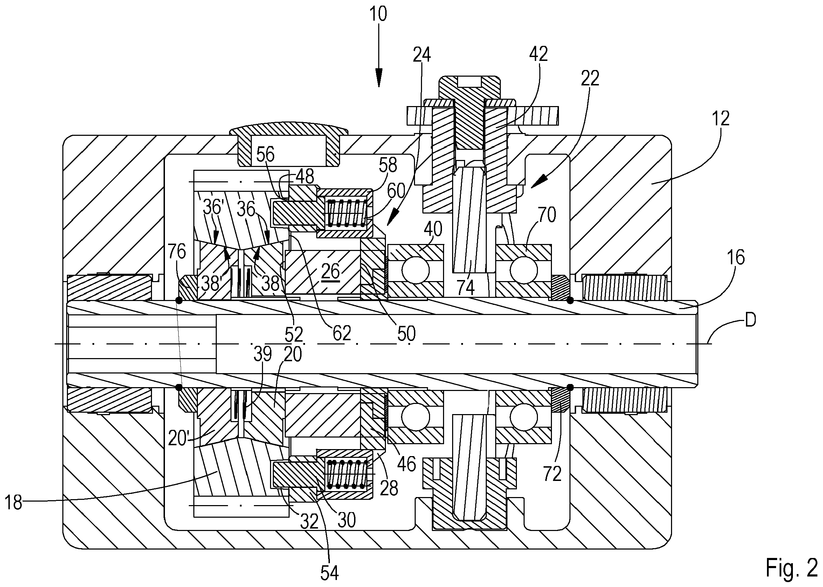

Die Axialverstellvorrichtung 22 ist über eine Exzentergabel 42 von außerhalb des Gehäuses 12 bedienbar. Hierfür ist die Exzentergabel 42 in herkömmlicher Weise in das Gehäuse 12 geführt und in diesem schwenkbar gelagert. Ein Verschwenken der Exzentergabel 12 führt zu einer axialen Spreizung der Axialverstellvorrichtung 22 bezogen auf die Drehachse D, wie weiter unten beschrieben wird. Die Axialverstellvorrichtung 22 weist bei der Ausführungsform gemäß Figur 1 ferner eine auf der Abtriebswelle 16 drehbar und axial verschiebbar gehaltene Lagerschale 44 auf. Die Spreizung der Axialverstellvorrichtung 22 über die Exzentergabel 42 bewirkt eine axiale Verschiebung der Lagerschale 44 in Richtung des Zahnrades 18. Die Lagerschale 44 überträgt die axiale Verschiebung auf den äußeren Ring des Kugellagers 40, so dass das Kugellager 40 insgesamt die gleiche Verschiebung erfährt. Bei der Ausführungsform gemäß den Figuren 2 bis 4 ist keine Lagerschale vorgesehen, so dass die axiale Verschiebung unmittelbar von der Axialverstellvorrichtung 22 auf das Kugellager 40 übertragen wird. Das Kugellager 40 überträgt über seinen inneren Ring die axiale Verschiebung auf die Übertragungsvorrichtung 24, die ein Zustellen der kuppelbaren Teile der Kupplungsanordnung 10 bewirkt.

Die Übertragungsanordnung 24 umfasst ein Mitnehmerelement 28, das topfförmig gestaltet ist und mit einem Bundabschnitt 46 axial verschiebbar und drehfest auf der Abtriebswelle 16 gehalten ist. Bei der Ausführungsform gemäß den Figuren 2 bis 4 ist der Bundabschnitt 46 zweiteilig gestaltet. Der Bundanschnitt 46 steht mit dem inneren Ring des Kugellagers 40 in Kontakt, sodass eine axiale Verschiebung des Kugellagers 40 in Richtung des Zahnrads 18 gleichermaßen eine axiale Verschiebung des Mitnehmerelements 28 bewirkt. In dem topfförmigen Mitnehmerelement 28 ist konzentrisch zu der Abtriebswelle 16 ein elastisches Element 26 derart angeordnet, dass das elastische Element 26 über eine dem Zahnrad 18 zugewandte Stirnfläche 48 des Mitnehmerelements 28 in axialer Richtung übersteht. Das elastische Element 26 liegt mit einer ersten Stirnfläche 50 im Bereich des Bundabschnittes 46 an dem Mitnehmerelement 28 an und mit einer zweiten Stirnfläche 52 an der Reibscheibe 20. Bevorzugt ist das elastische Element 26 ein druckfestes Elastomer.

Die Stirnfläche 48 ist an einem umlaufenden Kragen 54 des Mitnehmerelements 28 ausgebildet. In dem Kragen 54 sind über den Umfang gleichmäßig verteilt in axialer Richtung ausgerichtete Mitnehmerbolzen 30 angeordnet. Die Mitnehmerbolzen 30 ragen in Richtung des Zahnrades 18 über die Stirnfläche 48 hinaus und haben den gleichen radialen Abstand zur Drehachse D der Abtriebswelle 16. Gehalten werden die Mitnehmerbolzen 30 einerseits jeweils in einer Bohrung 56 in dem Kragen 54 und andererseits auf der von der Stirnfläche 48 abgewandten Seite des Kragens 54 jeweils in einem Aufnahmezylinder 58, in dem jeweils eine Druckfeder 60 aufgenommen ist, die sich in dem Aufnahmezylinder 58 abstützt und den jeweiligen Mitnahmebolzen 30 in Richtung des Zahnrads 18 beaufschlagt. Bei Beaufschlagung eines Mitnehmerbolzens 30 aus Richtung des Zahnrades 18 kann der Mitnehmerbolzen 30 unter Kompression der Druckfeder 60 in den Aufnahmezylinder 58 eingeschoben werden, bis er nicht mehr über die Stirnfläche 48 hinausragt. Eine bevorzugte Anzahl von Mitnehmerbolzen 30 über den Umfang des Kragens 54 beträgt vier Stück, kann aber auch je nach Anwendung hiervon abweichen.

Das Zahnrad 18 bildet auf einer dem Mitnehmerelement 28 zugewandten Stirnfläche 62 eine mit der Anzahl der Mitnehmerbolzen 30 bevorzugt übereinstimmende Anzahl von gleichmäßig beabstandeten Nuten 32 aus. Die Nuten 32 haben über ihren Verlauf in Umfangsrichtung den gleichen radialen Abstand zur Drehachse D der Abtriebswelle 16 wie die Mitnehmerbolzen 30, so dass die Nuten 32 auf der Stirnfläche 62 des Zahnrades 18 gekrümmt verlaufen.

Die Funktionsweise der Kupplungsanordnung 10, die grundsätzlich für beide hier beschriebenen Ausführungsformen gilt, ist folgende:
Ausgehend von der Auskuppelposition führt ein Verschwenken der Exzentergabel 42 zu einer axialen Spreizung der Axialverstellvorrichtung 22, die eine axiale Verschiebung der Lagerschale 44 in Richtung des Zahnrades 18 bewirkt. Die Lagerschale 44 überträgt die axiale Verschiebung auf den äußeren Ring des Kugellagers 40, so dass das Kugellager 40 über seinen inneren Ring die axiale Verschiebung auf das Mitnehmerelement 28 der Übertragungsvorrichtung 24 überträgt. Wie bereits erwähnt wikt bei der Ausführungsform gemäß Figuren 2 bis 4 die Axialverstellvorrichtung 22 unmittelbar auf den äußeren Ring des Kugellagers 40. Das Mitnehmerelement 28 verschiebt sich axial in Richtung des Zahnrades 18 und übertragt zunächst eine Zustellkraft über das elastische Element 26, welches bevorzugt ein druckfestes Elastomer ist, auf die konische Reibscheibe 20, die ihrerseits eine axiale Verschiebung gegenüber der Abtriebsachse 16 erfährt. Durch die axiale Verschiebung tritt die Reibscheibe 20 mit ihrer Reibfläche 36 in reibschlüssige Verbindung mit der Gegenfläche 38 des Zahnrades 18. Hierdurch erfährt das Zahnrad 18 eine axiale Verschiebung, so dass die Gegenfläche 38' mit der Reibfläche 36' der Reibscheibe 20' in reibschlüssige Verbindung tritt, wobei die Reibscheibe 20' entweder gegenüber der Abtriebswelle 16 oder dem Gehäuse 12 in axialer Richtung abgestützt ist, je nach Ausführungsform der Kupplungsanordnung 10, was weiter unten noch beschrieben wird. Dies ist die Einkuppelposition der Kupplungsanordnung 10.

Bei weiterem Verschwenken der Exzentergabel 12 führt eine weitere Spreizung der Axialverstellvorrichtung 22 dazu, dass zunächst die Zustellkraft über das elastische Element 26 auf die Reibscheiben 20, 20' weiter ansteigen, bis die Mitnehmerbolzen 30 des Mitnehmerelements 28 in die Nuten 32 des Zahnrades 18 eingreifen und eine formschlüssige Verbindung herstellen. Bevor die Mitnehmerbolzen 30 in die Nuten 32 eingreifen, kann es passieren, dass die Mitnehmerbolzen 30 zunächst an die Stirnfläche 62 des Zahnrades 18 anlaufen und sich gegen die Federkraft der Druckfeder 60 in die Aufnahmezylinder 58 einschieben. Wenn das zu übertragende Drehmoment größer ist, als das durch die maximale Kraft des Elastomers verfügbare reibschlüssiges Moment der Konuskupplung 10, herrscht zwischen dem Zahnrad 18 und den Reibscheiben 20, 20' beziehungsweise dem Mitnehmerelement 28 eine Relativdrehung, bis die Mitnehmerbolzen 30 fluchtend zu den Nuten 32 liegen und die Mitnehmerbolzen 30 durch die Druckfedern 60 in Eingriff in die Nuten 32 beaufschlagt werden. In dieser Eingriffsposition besteht eine formschlüssige Verbindung zwischen dem Zahnrad 18 und der Abtriebswelle 16 über das Mitnahmeelement 28, so dass kein Schlupf zwischen dem Zahnrad 18 und den Reibscheiben 20, 20' bestehen kann. Dies führt zu deutlich reduzierter Wärmeentwicklung in dem Gehäuse 12 und deutlich reduziertem Verschleiß der Reibscheiben 20, 20'. Der Vorteil ist, dass das reibschlüssig übertragbare Drehmoment kleiner gewählt werden kann, als für die maximale Anwendung im Dauerbetrieb erforderlich ist. Dadurch kann die Bauteilgröße gering gehalten und die auftretende Wärmeentwicklung reduziert werden. Ebenso lassen sich damit die Betätigungskräfte und Betätigungswege gering halten.

Der Unterschied zwischen der ersten Ausführungsform, Figur 1, und der zweiten Ausführungsform, Figuren 2 bis 4, besteht in der Abstützung der axialen Kräfte der Axialverstellvorrichtung 22 bei Spreizung durch die Exzentergabel 42.

Bei der ersten Ausführungsform, Figur 1, erfolgt die Abstützung der axialen Kräfte gegenüber dem Gehäuse 12. Die Abstützung erfolgt zur einen axialen Seite im Bereich der Axialverstellvorrichtung 22 über eine im Wesentlichen senkrecht versetzt zu der Abtriebswelle 16 im Gehäuse 12 drehbar gehaltene Exzenterwelle 64. Die Exzenterwelle 64 kann über die Exzentergabel 42 gedreht werden, so dass mit der Exzenterwelle 64 verbundene Nocken 66, 66' mit der Lagerschale 44 in Kontakt treten und die zuvor beschriebene axiale Verschiebung der Lagerschale 44 bewirken. Die Abstützung zur anderen axialen Seite erfolgt über ein zweites Kugellager 68, an dessen inneren Ring sich zumindest mittelbar die Reibscheibe 20' in axialer Richtung abstützt und dessen äußerer Ring sich an dem Gehäuse 12 abstützt.

Bei der zweiten Ausführungsform, Figuren 2 bis 4, erfolgt die Abstützung der axialen Kräfte der Axialverstellvorrichtung 22 gegenüber der Abtriebswelle 16. Die Abstützung erfolgt zur einen Seite im Bereich der Axialverstellvorrichtung 22 über ein zweites Kugellager 70, dessen innerer Ring sich über einen gegenüber der Abtriebswelle 16 axial unverschieblichen Sicherungsring 72 abstützt. An dem äußeren Ring des Kugellagers 70 stützt sich ein Spreizelement 74 ab, welches durch die Exzentergabel 42 schwenkbar betätigt werden kann. Das Spreizelement 74 beaufschlagt den äußeren Ring des Kugellagers 40, so dass hierüber die axiale Verschiebung eingeleitet wird. Die Abstützung zur anderen axialen Seite erfolgt über einen zweiten gegenüber der Abtriebswelle 16 axial unverschieblichen Sicherungsring 76, gegen den sich zumindest mittelbar die Reibscheibe 20' axial abstützt.

### Bezugszeichenliste

- 10: Kupplungsanordnung
- 12: Gehäuse
- 14: Antriebswelle
- 16: Abtriebswelle
- 18: Zahnrad
- 20, 20': Reibscheibe
- 22: Axialverstellvorrichtung
- 24: Übertragungsanordnung
- 26: elastisches Element
- 28: Mitnehmerelement
- 30, 30': Mitnehmerbolzen
- 32: Nut
- 34: Schnecke
- 35: Konuspaarung
- 36: Reibfläche
- 38: Gegenfläche
- 39: Wellfeder
- 40: Kugellager
- 42: Exzentergabel
- 44: Lagerschale
- 46: Bundabschnitt
- 48: Stirnfläche
- 50: erste Stirnfläche
- 52: zweite Stirnfläche
- 54: Kragen
- 56: Bohrung
- 58: Aufnahmezylinder
- 60: Druckfeder
- 62: Stirnfläche
- 64: Exzenterwelle
- 66: Nocke
- 68: Kugellager
- 70: Kugellager
- 72: Sicherungsring
- 74: Spreizelement
- 76: Sicherungsring
- D: Drehachse

## Patentansprüche

1. Kupplungsanordnung (10), umfassend
ein Gehäuse (12), eine Antriebswelle (14) und eine Abtriebswelle (16), die in dem Gehäuse (12) drehbar gelagert sind,
ein Zahnrad (18), das um eine Drehachse der Abtriebswelle (16) drehbar angeordnet ist und das mit der Antriebswelle (14) in einem Verzahnungseingriff steht,
zwei konische Reibscheiben (20, 20'), die axial verschiebbar und drehfest auf der Abtriebswelle (16) konzentrisch innerhalb des Zahnrades (18) angeordnet sind,
eine Axialverstellvorrichtung (22) zum Betätigen einer Übertragungsanordnung (24), mittels der die zwei Reibscheiben (20, 20') in eine reibschlüssige Verbindung mit dem Zahnrad (18) beaufschlagbar ist, um das Zahnrad (18) über die zwei Reibscheiben (20,20') antriebsmäßig mit der Abtriebswelle (16) zu verbinden,
wobei die Übertragungsanordnung (24) und das Zahnrad (18) in einen formschlüssigen Eingriff zueinander überführbar sind, um das Zahnrad (18) über die Übertragungsanordnung (24) antriebsmäßig mit der Abtriebswelle (16) zu verbinden.

2. Kupplungsanordnung (10) nach Anspruch 1, **dadurch gekennzeichnet,**
**dass** die Übertragungsanordnung (24) mittels der Axialverstellvorrichtung (22) in den formschlüssigen Eingriff mit dem Zahnrad (18) überführbar ist.

3. Kupplungsanordnung (10) nach Anspruch 1 oder 2, **dadurch gekennzeichnet,**
**dass** die Übertragungsanordnung (24) konzentrisch und zwischen einer Auskuppelposition, in der eine antriebsmäßige Verbindung zwischen dem Zahnrad (18) und der Abtriebswelle (16) im Wesentlichen unterbrochen ist, und einer Eingriffsposition, in der die Übertragungsanordnung (24) in formschlüssigem Eingriff mit dem Zahnrad (18) steht, axial verschiebbar auf der Abtriebswelle (16) angeordnet ist.

4. Kupplungsanordnung (10) nach Anspruch 3, **dadurch gekennzeichnet,**
**dass** die Übertragungsanordnung (24) zwischen der Auskuppelposition und der Eingriffsposition in eine Einkuppelposition verschiebbar ist, in der die zwei Reibscheiben (20,20') reibschlüssig mit dem Zahnrad (18) verbunden ist.

5. Kupplungsanordnung (10) nach Anspruch 4, **dadurch gekennzeichnet,**
**dass** über einen Verschiebeweg von der Einkuppelposition in die Eingriffsposition der Übertragungsanordnung (24) die Beaufschlagung der zwei Reibscheiben (20,20') durch die Übertragungsanordnung (24) stetig zunimmt.

6. Kupplungsanordnung (10) nach einem der Anspruch 1 bis 5, **dadurch gekennzeichnet, dass** die Übertragungsanordnung (24) ein elastisches Element (26) umfasst, über das die zwei Reibscheiben (20,20') in die reibschlüssige Verbindung mit dem Zahnrad (18) beaufschlagbar ist.

7. Kupplungsanordnung (10) nach einem der Anspruch 1 bis 6, **dadurch gekennzeichnet,**
**dass** die Übertragungsanordnung (24) ein Mitnehmerelement (28) umfasst, das in den formschlüssigen Eingriff mit dem Zahnrad (18) überführbar ist.

8. Kupplungsanordnung (10) nach Anspruch 7, **dadurch gekennzeichnet,**
**dass** das Mitnehmerelement (28) axial verschiebbar und drehfest auf der Abtriebswelle (16) angeordnet ist.

9. Kupplungsanordnung (10) nach Anspruch 7 oder 8, **dadurch gekennzeichnet,**
**dass** das Mitnehmerelement (28) zumindest einen parallel zur Drehachse ausgerichteten Mitnehmerbolzen (30) zum Eingriff in das Zahnrad (18) in der Eingriffsposition aufweist.

10. Kupplungsanordnung (10) nach Anspruch 9, **dadurch gekennzeichnet,**
**dass** der zumindest eine Mitnehmerbolzen (30) in axialer Richtung nachgiebig in dem Mitnehmerelement (28) gehalten sind.

11. Kupplungsanordnung (10) nach Anspruch 9 oder 10, **dadurch gekennzeichnet,**
**dass** in dem Zahnrad (18) zumindest eine in Richtung des Mitnehmerelements (28) offene Nut (32) vorgesehen ist, zum Eingriff des zumindest einen Mitnehmerbolzens (30) in der Eingriffsposition.

12. Kupplungsanordnung (10) nach einem der Anspruch 1 bis 11, **dadurch gekennzeichnet,**
**dass** die Axialverstellvorrichtung (22) zu entgegengesetzten axialen Seiten zumindest mittelbar in dem Gehäuse (12) abgestützt ist.

13. Kupplungsanordnung (10) nach einem der Anspruch 1 bis 11, **dadurch gekennzeichnet,**
**dass** die Axialverstellvorrichtung (22) zu entgegengesetzten axialen Seiten zumindest mittelbar gegenüber der Abtriebswelle (16) abgestützt ist.

## Claims

1. Coupling arrangement (10), comprising
a housing (12), a drive shaft (14) and an output shaft (16), which are mounted rotatably in the housing (12),
a gearwheel (18) which is arranged such that it can be rotated about a rotational axis of the output shaft (16), and which is in toothing engagement with the drive shaft (14),
two conical friction discs (20, 20') which are arranged concentrically within the gearwheel (18) and on the output shaft (16) such that they can be displaced axially and are fixed on the said output shaft (16) so as to rotate with it,
an axial adjustment apparatus (22) for actuating a transmission arrangement (24), by means of which the two friction discs (20, 20') can be loaded into a frictionally locking connection with the gearwheel (18), in order to drive-connect the gearwheel (18) to the output shaft (16) via the two friction discs (20, 20'),
it being possible for the transmission arrangement (24) and the gearwheel (18) to be transferred into positively locking engagement with respect to one another, in order to drive-connect the gearwheel (18) to the output shaft (16) via the transmission arrangement (24).

2. Coupling arrangement (10) according to Claim 1, **characterized in that** the transmission arrangement (24) can be transferred by means of the axial adjustment apparatus (22) into the positively locking engagement with the gearwheel (18).

3. Coupling arrangement (10) according to Claim 1 or 2, **characterized in that** the transmission arrangement (24) is arranged on the output shaft (16) concentrically and such that it can be displaced axially between an uncoupled position, in which a drive connection between the gearwheel (18) and the output shaft (16) is substantially interrupted, and an engagement position, in which the transmission arrangement (24) is in positively locking engagement with the gearwheel (18).

4. Coupling arrangement (10) according to Claim 3, **characterized in that** the transmission arrangement (24) can be displaced between the uncoupled position and the engagement position into a coupled position, in which the two friction discs (20, 20') are connected in a frictionally locking manner to the gearwheel (18).

5. Coupling arrangement (10) according to Claim 4, **characterized in that** the loading of the two friction discs (20, 20') by way of the transmission arrangement (24) increases continuously over a displacement travel from the coupled position into the engagement position of the transmission arrangement (24).

6. Coupling arrangement (10) according to one of Claims 1 to 5, **characterized in that** the transmission arrangement (24) comprises an elastic element (26), via which the two friction discs (20, 20') can be loaded into the frictionally locking connection with the gearwheel (18) .

7. Coupling arrangement (10) according to one of Claims 1 to 6, **characterized in that** the transmission arrangement (24) comprises a driver element (28) which can be transferred into the positively locking engagement with the gearwheel (18).

8. Coupling arrangement (10) according to Claim 7, **characterized in that** the driver element (28) is arranged such that it can be displaced axially and is fixed on the output shaft (16) so as to rotate with it.

9. Coupling arrangement (10) according to Claim 7 or 8, **characterized in that** the driver element (28) has at least one driver pin (30) which is oriented parallel to the rotational axis for the engagement into the gearwheel (18) in the engagement position.

10. Coupling arrangement (10) according to Claim 9, **characterized in that** the at least one driver pin (30) are held in the driver element (28) such that they are compliant in the axial direction.

11. Coupling arrangement (10) according to Claim 9 or 10, **characterized in that** at least one groove (32) which is open in the direction of the driver element (28) is provided in the gearwheel (18), for the engagement of the at least one driver pin (30) in the engagement position.

12. Coupling arrangement (10) according to one of Claims 1 to 11, **characterized in that** the axial adjustment apparatus (22) is supported at least indirectly in the housing (12) on opposite axial sides.

13. Coupling arrangement (10) according to one of Claims 1 to 11, **characterized in that** the axial adjustment apparatus (22) is supported at least indirectly with respect to the output shaft (16) on opposite axial sides.

## Revendications

1. Agencement d'embrayage (10), comprenant un boîtier (12), un arbre d'entraînement (14) et un arbre de sortie (16) qui sont supportés de manière rotative dans le boîtier (12),
une roue dentée (18) qui est disposée de manière rotative autour d'un axe de rotation de l'arbre de sortie (16) et qui est en prise d'engagement denté avec l'arbre d'entraînement (14),
deux disques de friction coniques (20, 20') qui sont disposés de manière déplaçable axialement et solidaire en rotation sur l'arbre de sortie (16) de manière concentrique à l'intérieur de la roue dentée (18) ,
un dispositif de réglage axial (22) pour actionner un agencement de transfert (24) au moyen duquel les deux disques de friction (20, 20') peuvent être sollicités en liaison d'engagement par friction avec la roue dentée (18), afin de connecter par entraînement la roue dentée (18) par le biais des deux disques de friction (20, 20') à l'arbre de sortie (16),
l'agencement de transfert (24) et la roue dentée (18) pouvant être engagés l'un dans l'autre par engagement par correspondance de formes, afin de relier la roue dentée (18) par entraînement à l'arbre de sortie (16) par le biais de l'agencement de transfert (24) .

2. Agencement d'embrayage (10) selon la revendication 1, **caractérisé en ce que** l'agencement de transfert (24) peut être engagé avec la roue dentée (18) au moyen du dispositif de réglage axial (22) dans l'engagement par correspondance de formes.

3. Agencement d'embrayage (10) selon la revendication 1 ou 2, **caractérisé en ce que** l'agencement de transfert (24) est disposé sur l'arbre de sortie (16), de manière déplaçable axialement concentriquement et entre une position de découplage dans laquelle une liaison d'entraînement entre la roue dentée (18) et l'arbre de sortie (16) est sensiblement interrompue, et une position d'engagement, dans laquelle l'agencement de transfert (24) est engagé par correspondance de formes avec la roue dentée (18).

4. Agencement d'embrayage (10) selon la revendication 3, **caractérisé en ce que** l'agencement de transfert (24) peut être déplacé entre la position de découplage et la position d'engagement dans une position d'accouplement dans laquelle les deux disques de friction (20, 20') sont connectés par engagement par friction à la roue dentée (18).

5. Agencement d'embrayage (10) selon la revendication 4, **caractérisé en ce que** par le biais d'une course de déplacement de l'agencement de transfert (24) de la position d'accouplement dans la position d'engagement, la sollicitation des deux disques de friction (20, 20') par l'agencement de transfert (24) augmente constamment.

6. Agencement d'embrayage (10) selon l'une quelconque des revendications 1 à 5, **caractérisé en ce que** l'agencement de transfert (24) comprend un élément élastique (26) par le biais duquel les deux disques de friction (20, 20') peuvent être sollicités avec la roue dentée (18) en liaison par engagement par friction.

7. Agencement d'embrayage (10) selon l'une quelconque des revendications 1 à 6, **caractérisé en ce que** l'agencement de transfert (24) comprend un élément d'entraînement (28) qui peut être amené en engagement par correspondance de formes avec la roue dentée (18).

8. Agencement d'embrayage (10) selon la revendication 7, **caractérisé en ce que** l'élément d'entraînement (28) est disposé de manière déplaçable axialement et solidaire en rotation sur l'arbre de sortie (16).

9. Agencement d'embrayage (10) selon la revendication 7 ou 8, **caractérisé en ce que** l'élément d'entraînement (28) présente au moins un boulon d'entraînement (30) orienté parallèlement à l'axe de rotation pour l'engagement dans la roue dentée (18) dans la position d'engagement.

10. Agencement d'embrayage (10) selon la revendication 9, **caractérisé en ce que** l'au moins un boulon d'entraînement (30) est retenu dans la direction axiale de manière flexible dans l'élément d'entraînement (28).

11. Agencement d'embrayage (10) selon la revendication 9 ou 10, **caractérisé en ce qu'**au moins une rainure (32) ouverte dans la direction de l'élément d'entraînement (28) est prévue dans la roue dentée (18), pour l'engagement de l'au moins un boulon d'entraînement (30) dans la position d'engagement.

12. Agencement d'embrayage (10) selon l'une quelconque des revendications 1 à 11, **caractérisé en ce que** le dispositif de réglage axial (22) est supporté des côtés axiaux opposés au moins indirectement dans le boîtier (12).

13. Agencement d'embrayage (10) selon l'une quelconque des revendications 1 à 11, **caractérisé en ce que** le dispositif de réglage axial (22) est supporté des côtés axiaux opposés au moins indirectement par rapport à l'arbre de sortie (16).
